# NEUE EUROPÄISCHE PATENTSCHRIFT

(11) **EP 0 636 216 B2**
(45) Veröffentlichungstag und Bekanntmachung des Hinweises auf die Entscheidung über den Einspruch: **03.07.2002**
(45) Hinweis auf die Patenterteilung: 20.03.1996
(21) Anmeldenummer: 93907790.5
(22) Anmeldetag: 06.04.1993
(51) Int. Cl.: F16D 55/226, F16D 65/16, F16C 33/20

(54) **DRUCKLUFTBETÄTIGTE SCHEIBENBRENSE**
COMPRESSED-AIR DISK BRAKE
FREIN A DISQUE A AIR COMPRIME

(30) Priorität: 13.04.1992 DE 4212384
(43) Veröffentlichungstag der Anmeldung: 01.02.1995
(73) Patentinhaber: KNORR-BREMSE Systeme für Nutzfahrzeuge GmbH, 80809 München (DE)
(72) Erfinder: BAUMGARTNER, Hans, D-8052 Moosburg (DE); IRASCHKO, Johann, D-8069 Schweitenkirchen (DE); SCHULLERUS, Otto, D-8000 München 40 (DE); TRIMPE, Robert, D-8000 München 50 (DE)
(74) Vertreter: Specht, Peter, Dipl.-Phys.
(86) Internationale Anmeldenummer: DE9300325
(87) Internationale Veröffentlichungsnummer: WO9321452

(56) Entgegenhaltungen:
- EP-B1- 0 044 577
- DE-A- 3 213 356
- DE-A- 3 716 202
- DE-A- 4 032 885
- US-A- 4 309 474
- US-A- 4 394 275
- US-A- 4 847 135

## Beschreibung

Die Erfindung bezieht sich auf eine druckluftbetätigte Scheibenbremse gemäß dem Oberbegriff des Anspruchs 1.

Druckluftbetätigte bzw. pneumatische Scheibenbremsen der gattungsgemäßen Art sind beispielsweise aus der **DE-OS 37 16 202** sowie aus der nicht vorveröffentlichten **DE- OS 40 32 885** bekannt. Bei diesen bekannten Scheibenbremsen wird eine Bremsscheibe von einem axial verschiebbaren Bremssattel umfaßt, wobei auf einer Seite des Bremssattels eine druckluftbetätigte Zuspannvorrichtung angeordnet ist, die bei Betätigung eine auf dieser Seite der Bremsscheibe befindliche Bremsbacke gegen diese drückt, wodurch in einer Gegenreaktion eine auf der gegenüberliegenden Seite befindliche Bremsbacke gleichfalls gegen die Bremsscheibe gedrückt wird. Die Zuspannvorrichtung weist als Betätigungsorgan einen Drehhebel auf, der bremsscheibenabgewandt in einem gegenüber dem Bremssattel abgestützten, im wesentlichen halbkreisförmigen Drehlager gelagert ist, dessen Drehachse die Bremsscheibenachse rechtwinklig kreuzt. Auf seiner der Bremsscheibe zugewandten Seite liegt der Drehhebel mittels eines Exzenters etwa längsmittig an einer sich parallel zur Drehachse erstreckenden Traverse an, die bezüglich der Bremsscheibe verschiebbar geführt ist und über mindestens ein Druckstück auf die zugeordnete Bremsbacke einwirkt.

Im Falle der aus der **DE-OS 37 16 202** bekannten Zuspannvorrichtung ist als Exzenter ein parallel zur Drehachse wirkender halbzylindrischer Vorsprung am Drehhebel ausgebildet, der exzentrisch zur Drehachse mit zur Bremsscheibe gerichteter Druckrichtung auf eine parallel zur Radialebene der Bremsscheibe verlaufende Druckplatte einwirkt, die mittels eines ebenen Lagers auf der Traverse gelagert ist. Durch diese Anordnung wird erreicht, daß die vom Exzenter hervorgerufenen Querkräfte von der Traverse weitgehend abgehalten werden, so daß diese in ihrer Führung einwandfrei gleitet.

Bei der in der **DE-OS 40 32 885** beschriebenen Zuspannvorrichtung ist als Exzenter eine Drehlagerungsvorrichtung vorgesehen, die vorzugsweise durch einen Bolzen gebildet wird, der in einer längsmittig verlaufenden, halbkreisförmigen Ausnehmung der Traverse sowie in einer entsprechenden, exzentrisch verlaufenden Ausnehmung des Drehhebels angeordnet ist. Hierbei ist zwischen dem Bolzen und dem Drehhebel und/oder zwischen dem Bolzen und der Traverse ein entsprechend halbkreisförmiges Drehlager vorgesehen. Obgleich mit dieser Anordnung die Umsetzung der Drehbewegung des Drehhebels in die für die Traverse erforderliche Längsbewegung nicht völlig querkraftfrei gelingt, hat es sich in der Praxis gleichwohl erwiesen, daß die dabei auftretende geringfügige Kippbewegung der Traverse keinerlei Probleme bereitet und somit vernachlässigt werden kann. Jedoch zeichnet sich diese Ausführmgsform des Exzenters gegenüber der in der **DE-OS 37 16 202** vorgeschlagenen Anordnung durch wesentlich einfacheren Aufbau und entsprechend geringere Herstellungskosten aus.

Bei Scheibenbremsen der gattungsgemäßen Art ist einer der wichtigsten Betriebs faktoren in einem möglichst hysteresefreien Betrieb der Bremse zu sehen, d.h. bei Verringerung des Bremsdrucks sollte sich die Bremsleistung möglichst verzögerungsfrei entsprechend verringern. Untersuchungen bei den beiden eingangs genannten Zuspannvorrichtungen haben ergeben, daß sich durch Verringerung der Reibungsbeiwerte der Hebelmechanik eine deutliche Verbesserung des Hystereseverhaltens der Bremse erzielen läßt, wobei in diesem Zusammenhang dem den Drehhebel gegenüber dem Bremssattel abstützenden halbkreisförmigen Drehlager sowie dem zwischen dem Exzenter und der Traverse bzw. dem zwischen dem Exzenter und dem Drehhebel befindlichen Lager große Bedeutung zukommt. Bei den bekannten Zuspannvorrichtungen werden daher für die beiden Lager jeweils Rollenlager verwendet, die bei hoher Belastbarkeit ausreichend gute Reibbeiwerte aufweisen, so daß die Bremshysterese durch die Hebelmechanik nicht nachteilig beeinflußt wird. Derartige Rollenlager sind jedoch vergleichsweise teuer und auch insoweit nachteilig, als die Montage der Zuspannvorrichtung hierdurch deutlich erschwert wird.

In der eingangs genannten, nicht vorveröffentlichten **DE-OS 40 32 885** wurde daher bereits in Erwägung gezogen, mindestens eines der beiden Lager der Hebelmechanik als Gleitlager auszubilden. Versuche mit derartigen Lagern haben bislang jedoch zu keinen befriedigenden Ergebnissen geführt; insbesondere war es bislang nicht möglich, ein Lager zu finden, das sowohl eine ausreichend hohe Lebensdauer als auch so geringe Reibbeiwerte aufweist, daß die erzielbare Hysteres befriedigend ist. Im Falle des mit dem Exzenter in Wirkverbindung stehenden Lagers wurde der Einsatz eines Gleitlagers insbesondere auch deshalb verworfen, weil die bei der bevorzugten Geometrie der Hebelanordnung auftretenden Lagerbelastungen die maximale Belastbarkeit der untersuchten Gleitlager überschritten haben, so daß keine ausreichrend hohe Lebensdauer erzielt werden konnte.

Aus dem Prospekt "Permaglide (eingetragene Marke) Gleitlager" der Firma Kolbenschmidt (8/89) S.42 und 43 ist ein Gleitlagermaterial bekannt, welches aus Polyvinylidenfluorid (PVDF), Polytetrafluoräthylen (PFTE) und Blei (Pb) besteht, dessen Belastbarkeit 250N/mm² beträgt.

Der Erfindung liegt die Aufgabe zugrunde, eine druckluftbetätigte Scheibenbremse gemäß dem Oberbegriff des Anspruchs 1 derart weiterzubilden, daß die Herstellungs- und Montagekosten der Zuspannvorrichtung bei gleichbleibend guter Bremshysterese deutlich verringert werden können.

Diese Aufgabe wird erfindungsgemäß mit dem im Kennzeichnungsteil des Anspruchs 1 angegebenen Maßnahmen gelöst.
Untersuchungen haben überraschend ergeben, daß ein diese Zusammensetzung aufweisendes Gleitlager bei den im Betrieb der Hebelmechanik auftretenden dynamischen Beanspruchungen selbst dann nicht ausfällt und eine in jedem Fall ausreichende, außerordentlich lange Lebensdauer aufweist, wenn es unter extrem hohen Belaslungswerten betrieben wird. Das genannte Gleitlager hat darüberhinaus die Eigenschaft, daß sich sein Reibbeiwert im hochbelasteten Zustand wesentlich verringert, so daß die erfindungsgemäß erzielten Reibbeiwerte die eines Rollenlagers erreichen oder sogar übertreffen.

Da ein Gleitlager einerseits wesentlich billiger als ein Rollenlager ist und andererseits beim Zusammenbau der Zuspannvorrichtung wesentlich weniger Mühe erfordert, werden sowohl die Herstellungs- als auch die Montagekosten der Zuspannvorrichtung erfindungsgemäß wesentlich verringert. Aufgrund des geringen Reibbeiwerts des erfindungsgemäßen Gleitlagers wird darüberhinaus ein äußerst günstiger Wirkungsgrad der Hebelmechanik erreicht, so daß die damit ausgerüstete Scheibenbremse ein sehr gutes Hystereseverhalten aufweist.

Bei der Dimensionierung der Lagerflächen weist die druckbeaufschlagte Gleitfläche des weiteren Gleitlagers eine derartige Ausdehnung auf, daß die bei maximaler Druckbeaufschlagung des Drehhebels auftretende Lagerbeanspruchung 200 N/mm2 bis 300 N/mm2 beträgt. Diese Belastungswerte haben selbst nach extremen Dauerversuchen zu keinem Lagerausfall geführt und erlauben aufgrund der erwähnten Eigenschaft des Lagers, daß sich der Reibbeiwert bei erhöhtem Druck verbessert, die Einstellung eines optimalen Hystereseverlaufes. Bei dieser Dimensionierung des weiteren lagers beträgt der Umschlingungswinkel nicht mehr als 120 Grad, da hierdurch jegliches Klemmen der Zuspannvorrichtung sicher verhindert werden kann.

Besonders vorteilhafte Eigenschaften des erfindungsgemäßen Lagers wurden dann erzielt wenn dieses gemäß den Angaben der Unteransprüche aufgebaut ist, wobei ein derartiges Gleitlager vorzugsweise Schmiertaschen aufweisen sollte, da in diesem Fall die Reibbeiwerte weiter verringert werden und langzeitlich konstant bleiben.

Die Erfindung wird nachstehend anhand der Beschreibung von Ausführungsbeispielen unter Bezugnahme auf die Zeichnung näher erläutert. Es zeigen:
**Fig. 1** anhand eines Querschnitts den schematischen Aufbau der Zuspannvorrichtung;
**Fig. 2** einen Längsschnitt der in Fig. 1 gezeigten Zuspannvorrichtung;
**Fig. 3** eine bevorzugte Ausführungsform des Exzenters des Drehhebels; und
**Fig. 4 bis 5** weitere Ausführungsformen des Exzenters.

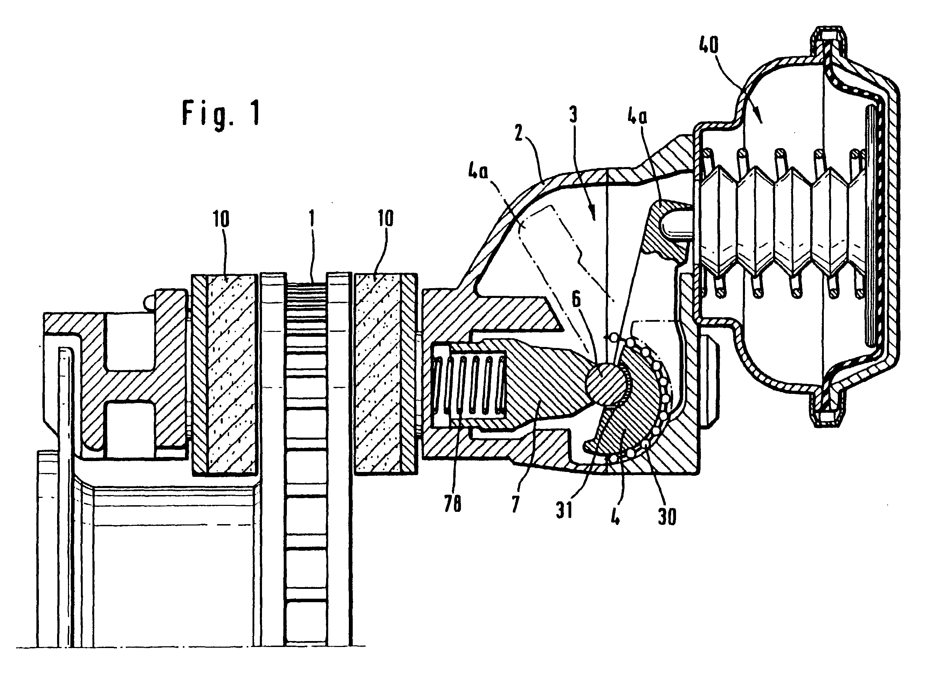

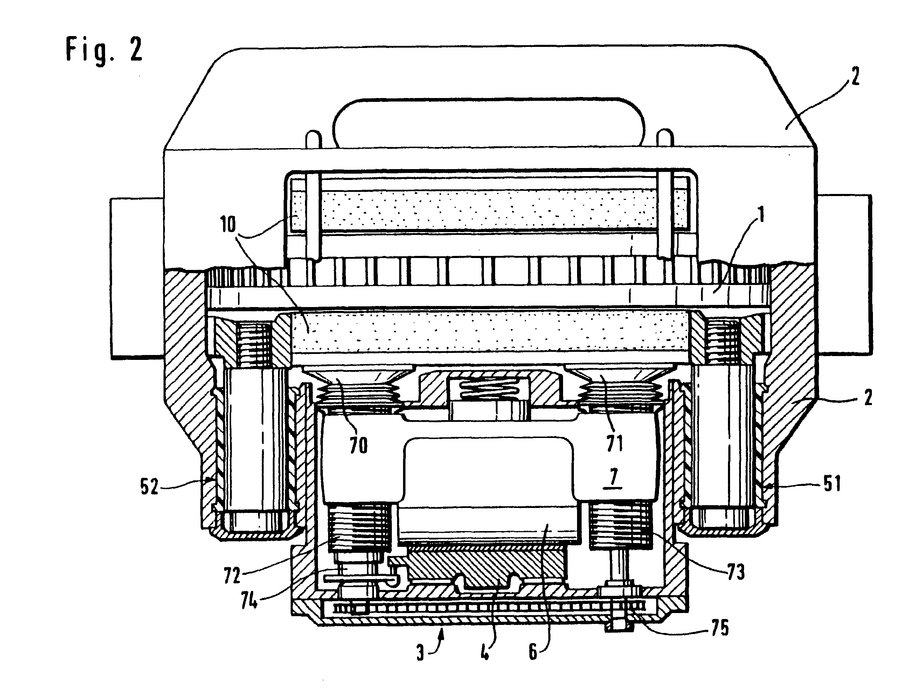

Wie aus den Figuren 1 und 2 zu erkennen ist, wird eine (innenbelüftete) Bremsscheibe 1, die an einer nicht näher bezeichneten Achse eines Nutzfahrzeugs befestigt ist, von einem Bremssattel 2 umfaßt. Der Bremssattel 2 ist gemäß Fig. 2 mittels eines starren Führungslagers 52 sowie mittels eines Ausgleichslagers 51 in axialer Verschiebbarkeit bezüglich der Bremsscheibe 1 am Fahrzeug gelagert. Im übrigen sind Aufbau und Funktion des Bremssattels bekannt, so daß sich eine nähere Erläuterung erübrigt.

Auf der in Fig. 1 rechten bzw. der in Fig. 2 unteren Seite der Bremsscheibe 1 ist eine schematisch mit dem Bezugszeichen 3 bezeichnete Zuspannvorrichtung angeordnet. Im Bremssattel 2 ist ein im wesentlichen halbkreisförmiges Drehlager 30 vorgesehen, das die Bremsscheibenachse rechtwinklig kreuzt und den entsprechend abgerundeten Rückenbereich eines Drehhebels 4 aufnimmt. Der Drehhebel 4 kann daher um eine zur Ebene der Bremsscheibe 1 parallel verlaufende Drehachse geschwenkt werden; zur Betätigung des Drehhebels 4 ist ein lediglich schematisch dargestellter Bremszylinder 40 vorgesehen, der mit einem Kolben in eine geeignet geformte Ausnehmung eines Betätigungsarms 4a des Drehhebels 4 eingreift. Wenn der Bremszylinder 40 mit der Druckluft beaufschlagt wird, wird der Betätigungsarm 4a des Drehhebels 4 folglich von seiner Ruheposition in die in Fig. 1 in gestrichelter Darstellung angedeutete Position bewegt. Es sei angemerkt, daß die Betätigung des Drehhebels 4 selbstverständlich auch über ein Bremsgestänge erfolgen kann, so daß der Bremszylinder 40 gegebenenfalls an einem anderen Ort plaziert werden kann, falls der verfügbare Einbauraum für die Scheibenbremse bzw. deren Zuspannvorrichtung begrenzt ist.

Die dem halbschalenförmigen Drehlager 30 abgewandte Seite des Drehhebels 4 ist über einen als Nocken dienenden Exzenter 6 mit einer Traverse 7 gekoppelt, die sich innerhalb des Bremssattels 2 im wesentlichen parallel zur Drehachse der Bremsscheibe 1 erstreckt und in dieser Ebene bewegbar ist. An ihrem der Bremsscheibe 1 zugewandten Ende weist die Traverse 7 eine sacklochartige Ausnehmung auf, die von einem in Richtung zur Bremsscheibe 1 auskragenden, rohrartigen Ansatz umgeben ist. Dieser Ansatz der Traverse 7 ist in einer entsprechenen Ausnehmung des Bremssattels 2 rechtwinklig zur Ebene der Bremsscheibe 1 unter Beibehaltung eines derartigen Spiels schiebegelagert, daß die Traverse 7 geringfügige Schwenkbewegungen in der Zeichnungsebene ausführen kann. Innerhalb der Ausnehmung ist eine Spiralfeder 78 angeordnet, die zwischen die Traverse 7 und das der Bremsscheibe 1 zugewandte Ende des Bremssattels 2 eingespannt ist und dadurch die Traverse 7 zum Drehhebel 4 hin vorspannt

Wie insbesondere dem Längsschnitt der Fig. 2 entnehmbar ist, weist die Traverse 7 an beiden Seiten jeweils eine mit einem Innengewinde versehene Bohrung auf, in der jeweils eine Stellspindel 72 bzw. 73 justierbar verschraubt ist. An dem der Bremsscheibe 1 zugewandten Ende jeder der Stellspindeln 72 und 73 ist ein sich kegelförmig verbreitemdes Druckstück 70 bzw. 71 befestigt. Da sich die beiden Stellspindein 72 und 73 infolge ihrer Anordnung in der Traverse 7 senkrecht zur Ebene der Bremsscheibe 1 erstrecken, liegen die Druckstücke 70 und 71 mit ihren flachen Enden an einer Bremsbacke 10 an. Die Bremsbacke 10 ist insbesondere in Umfangsrichtung zur Bremsscheibe 1 über nicht gezeigte Halterungen quer zur Bremsscheibe 1 verschiebbar geführt, wobei die Halterungen entweder dem Bremssattel 2 oder einem Bremsträger zugeordnet sein können.

Im Inneren der Stellspindel 72 ist eine Nachstelleinrichtung 74 angeordnet, die infolge einer Axialverzahnung drehfest mit der Stellspindel 72 gekoppelt und in axialer Richtung verschiebbar ist. Die Nachstelleinrichtung 74 wird bei jeder Betätigung des Drehhebels 4 um einen bestimmten Winkelbetrag gedreht, wodurch ein kontinuierliches Nachstellen der Bremse gewährleistet ist. In eine entsprechende Axialverzahnung der gegenüberliegenden Stellspindel 73 greift ein Zahnrad ein, das über eine Welle mit einer Synchronisationseinrichtung 75 gekoppelt ist, die das innenliegende Zahnrad und damit die Spindel 73 synchron mit der Nachstelleinrichtung 74 dreht. Hierdurch wird erreicht, daß das Druckstück 71 synchron mit dem Druckstück 70 nachgestellt wird.

Obgleich bei der beschriebenen Ausführungsform der Traverse 7 zwei Stellspindeln und damit zwei Druckstücke vorgesehen sind, ist die Erfindung gleichwohl auch für eine solche Traverse verwendbar, die lediglich eine einzige Stellspindel und damit nur ein Druckstück aufweist. In diesem Fall ist die Stellspindel in der Mitte der Traverse 7 angeordnet, während der Exzenter 6 sowie die die Druckfeder aufweisende Lagerung der Traverse 7 jeweils in zweifacher Ausfertigung auf beiden Seiten der zentralen Stellspindel vorgesehen sind.

Nachfolgend wird das Arbeitsprinzip der erfindungsgemäßen Zuspanneinrichtung kurz erläutert. Bei Druckluftbeaufschlagung des Bremszylinders 40 wird der Betätigungsarm 4a gemäß Fig. 1 nach links verschwenkt, wodurch der am Drehhebel 4 wirkende Exzenter 6 um eine entsprechend den Hebelgesetzen verringerte Strecke gleichfalls nach links verschoben wird. Die Traverse 7 wird daher entgegen der Vorspannkraft der Spiralfeder 78 eine entsprechende Wegstrecke zur Bremsscheibe 1 hin gedrückt. Die an der Traverse 7 über die Stellspindeln 72 und 73 befestigten Druckstücke 70 bzw. 71 drücken folglich unter Überwindung des Lüftspiels (das in der Praxis ca. 0,4 mm beträgt) die Bremsbacke 10 gegen die Bremsscheibe 1. Wenn der Betätigungsarm 4a weiter nach links verschwenkt wird, verschiebt sich der Bremssattel aufgrund der auf die Bremsscheibe 1 ausgeübten Kraft in Fig. 1 nach rechts, so daß schließlich auch die linke Bremsbacke 10 gegen die Bremsscheibe 1 gepreßt wird.

Wenn die Bremsbacken 10 im Verlauf des vorstehend erläuterten Zuspannvorgangs um eine vorbestimmte, einem Soll-Lüftspiel entsprechende Strecke verschoben worden sind, wird die Nachstelleinrichtung 74 vom Drehhebel 4 betätigt. Sofern das Lüftspiel korrekt eingestellt ist, liegen beide Bremsbacken 10 zu diesem Zeitpunkt an der Bremsscheibe 1 an. Infolgedessen spricht eine in der Nachstelleinrichtung 74 vorgesehene Rutschkupplung an, so daß die Stellspindel 72 und die mit ihr synchronisierte Steilspindel 73 nicht verstellt werden. Wenn demgegenüber ein zu großes Lüftspiel vorliegt, was beispielsweise nach einem Belagwechsel oder bei zunehmendem Verschleiß der Bremsbacken der Fall ist, drehen sich die Stellspindeln 72 und 73 eine bestimmte Strecke und bringen dadurch das Lüftspiel, gegebenenfalls nach mehrmaliger Betätigung der Bremse, auf den Sollwert. Auf diese Weise ist gewährleistet, daß die erfindungsgemäße Scheibenbremse bis zum vollständigen Abrieb der Bremsbacken 10 funktionsfähig bleibt.

Bei der in den Figuren 1 bis 3 dargestellten Ausführungsform ist der Exzenter 6 durch einen Bolzen gebildet, der in einer längsmittigen, entsprechend geformten halbkreisförmigen Ausnehmung der Traverse 7 sitzt. Am gegenüberliegenden exzentrischen Bereich des Drehhebels 4 ist eine entsprechende halbkreisförmige Ausnehmung ausgebildet, in der der Bolzen 6 mittels eines Lagers 31 drehbar gelagert ist. Das Lager 31 ist erfindungsgemäß als Gleitlager ausgebildet, dessen Lagerbuchse so dimensioniert ist, daß die Nennbelastbarkeit der Lagerbuchse bei Druckluftbetätigung des Drehhebels 4 maximal zwischen 200 und 300 N/mm² beträgt. Bei dem Gleitlager handelt es sich dabei erfindungsgemäß um ein Lager, das aus einer Gleitschicht, einer Bronzeschicht sowie einem als Basis dienenden Stahlrücken gebildet ist, wobei die Gleitschicht mindestens 70, vorzugsweise 80 Vol.-% Polyvinylidenfluorid (PVDF), mindestens 10 Vol-% Polytetrafuoräthylen (PTFE) und im übrigen Blei enthält und ca 0.05 bis 0,1 mm dick ist. Die erforderliche Dimensionierung des Gleitlagers 31 läßt sich beispielsweise durch geeignete Wahl des Durchmessers des Bolzens 6 erreichen. Dies hat den Vorteil, daß die angestrebte Erhöhung der Belastung des Gleitlagers 31 in einem Bolzen 6 mit verringertem Durchmesser resultiert, wodurch die Kippbewegung der Traverse 7 gegebenfalls verringert werden kann. Die Lagerbelastung kann selbstverständlich auch durch Verringerung der Fläche des Gleitlagers 31 erhöht werden, wobei vorgesehen ist, den Umschlingungswinkel nicht größer als 120 Grad zu machen.

Bei der erfindungsgemäßen Betriebsart des Gleitlagers 31, bei dem dieses in einem relativ sehr hohen Lastzustand betrieben wird, verringert sich der Reibbeiwert gegenüber dem entsprechenden Wert bei geringer Belastung des Lagers um einen erheblichen Faktor. Hierdurch wird der Wirkungsgrad der Hebelmechanik der Zuspannvorrichtung deutlich verbessert, was sich günstig auf das Hystereseverhalten beim Bremsen auswirkt.

Ausführliche Langzeituntersuchungen haben bestätigt, daß das gemäß der Lehre der Erfindung aufgebaute Gleitlager im Gegensatz zu allen anderen untersuchten Lagem eine Lebensdauer aufweist, die den Anforderungen der Praxis in jedem Fall gerecht wird; ein weiterer Vorteil dieses Gleitlagers liegt darin, daß auch dann keine Beschädigung des Lagers auftritt, wenn bei voller Druckluftbeaufschlagung (maximale Betätigung des Bremspedals) gleichzeitig die Feststellbremse betätigt wird; d.h., das erfindungsgemäße Lager kann ohne weiteres den doppelten bis dreifachen Nenndruck aushalten. Dieser Belastungsfall führt bei den vorgegebenen Lagerabmessungen indes bei einem Rollenlager unvermeidlich zu einem Lagerschaden.

Obgleich bei den gezeigten Ausführungsformen das halbkreisförmige Drehlager 30 als Rollenlager ausgebildet ist, ist es selbstverständlich möglich, auch dieses Lager als Gleitlager auszubilden, das so dimensioniert ist, daß seine Nennbelastbarkeit überschritten wird. Auch bei diesem Lager bietet es sich an, einen relativ kleinen Umschlingungswinkel von ca. 120 Grad zu wählen. Hierdurch wird nämlich erreicht, daß eine Verklemmung des Lagers sicher ausgeschlossen ist, so daß die Betriebszuverlässigkeit weiter erhöht wird. Ausführliche Untersuchungen haben im übrigen gezeigt, daß die oben genannte Zusammensetzung sowie der erläuterte Schichtaufbau des Gleitlagers 30 eine hervorragende Lebensdauer sowie einen Reibbeiwert ermöglicht, der nahezu dem eines Rollenlagers entspricht; demzufolge wird ein hervorragendes Hysteresverhalten erzielt.

Weiterhin hat es sich als vorteilhaft erwiesen, das jeweilige Gleitlager bei der Montage der Zuspannvorrichtung mit einem geeigneten Schmiermittel zu schmieren; Langzeituntersuchungen haben in diesem Zusammenhang erwiesen, daß diese Schmierung für die gesamte Standzeit der Zuspannvorrichtung ausreichend ist, so daß keine zusätzlichen Schmierstoffe bei Wartungsarbeiten zugeführt werden müssen; hierdurch wird die Servicefreundlichkeit entscheidend verbessert.

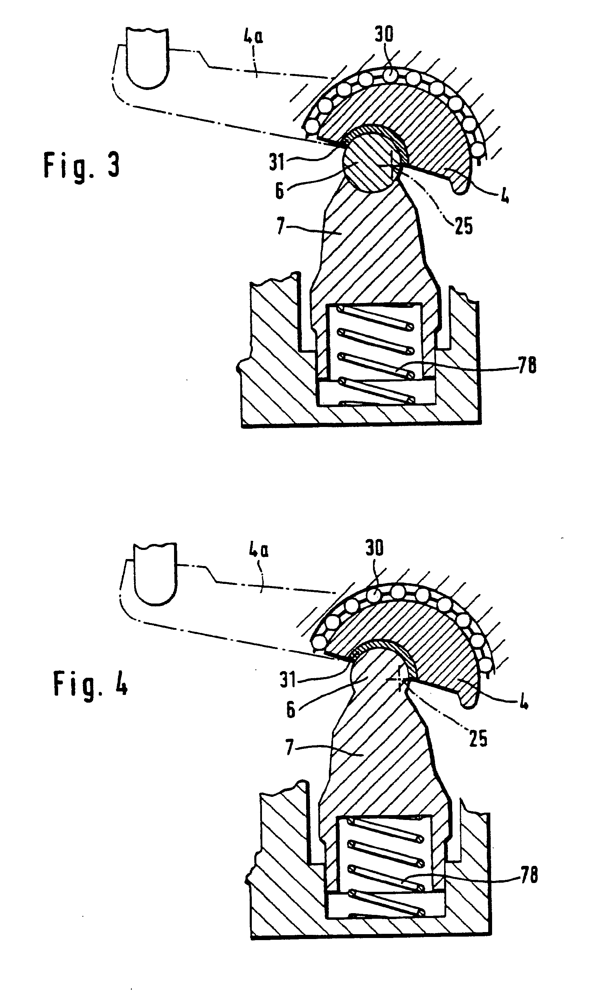

Fig. 3 zeigt die wesentlichen Komponenten des Drehhebels 4, des Bolzens 6 sowie der Traverse 7 In größeren Einzelheiten. Obgleich dies aus Fig. 3 nicht hervorgeht, besteht selbstverständlich die Möglichkeit, auch in der längsmittigen halbkreisförmigen Ausnehmung der Traverse 7 ein Lager vorzusehen, bei dem es sich vorzugsweise um ein entsprechend der Lehre der Erfindung aufgebautes Gleitlager handelt.

Fig. 4 zeigt eine abgewandelte Ausführungsform, bei der der den Exzenter bildende Bolzen 6 durch einen einstückig mit der Traverse 7 ausgebildeten Vorsprung gebildet ist, dessen dem Drehhebel 4 zugewandte Fläche halbkreisförmig abgerundet ist. Auch bei dieser Ausführungsform ist vorzugsweise das dem Vorsprung zugewandte Lager 31 ein erfindungsgemäßes Gleitlager. Jedoch kann auch das Lager 30 ein Gleitlager sein.

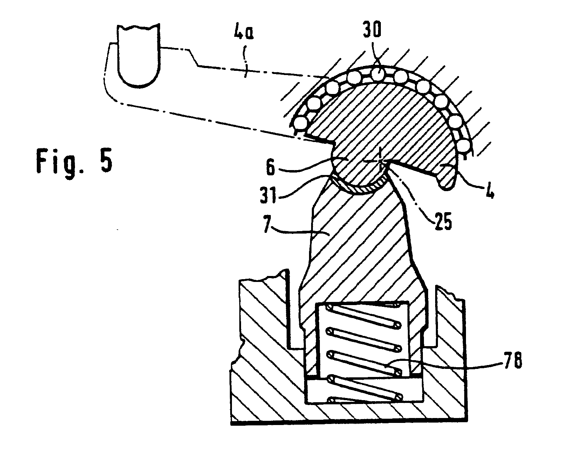

Fig. 5 zeigt eine Ausführungsform, bei der in Umkehrung zur Ausführungsform der Fig. 4 ein einstückig am Drehhebel 4 vorgesehener Vorsprung als Exzenter dient, dessen abgerundete Fläche in einem auf der Traverse 7 ausgebildeten Lager 31 gelagert ist. Auch bei dieser Ausführungsform handelt es sich bei dem Lager 31 vorzugsweise um ein unter hoher Belastung betriebenes Gleitlager.

## Patentansprüche

1. Druckluftbetätigte Scheibenbremse für Nutzfahrzeuge, mit einem eine Bremsscheibe (1) umfassenden Bremssattel (2), auf dessen einer Seite eine Zuspannvorrichtung (3) angeordnet ist, die einen Drehhebel (4, 4a) aufweist, der bremsscheibenabgewandt in einem gegenüber dem Bremssattel (2) abgestützten, im wesentlichen halbkreisförmigen Drehlager (30) um eine zur Ebene der Bremsscheibe (1) parallel verlaufende Drehachse (25) schwenkbar gelagert ist und bremsscheibenzugewandt mittels eines Exzenters (6) etwa längsmittig an einer sich parallel zur Drehachse (25) erstreckenden Traverse (7) anliegt, die bezüglich der Bremsscheibe (1) verschiebbar geführt ist und über mindestens ein Druckstück (70, 71) auf eine zuspannseitig im Bremssattel (2) bezüglich der Bremsscheibe (1) verschiebbar gelagerte Bremsbacke (10) einwirkt, wobei zwischen dem Exzenter (6) und der Traverse (7) oder zwischen dem Exzenter (6) und dem Drehhebel (4) ein weiteres Lager (31) vorgesehen ist, **dadurch gekennzeichnet, daß** mindestens das weitere der beiden Lager (31) als Gleitlager ausgebildet ist, dessen druckbeaufschlagte Gleitfläche aus mindestens 70 Vol.-% Polyvinylidenfluorid, mindestens 10 Vol.-% Polytetrafluoräthylen und im übrigen aus Blei besteht, wobei die druckbeaufschlagte Gleitfläche des weiteren Gleitlagers (31) so dimensioniert ist, daß die bei maximaler Druckbeaufschlagung des Drehhebels (4, 4a) auftretende Lagerbeanspruchung zwischen 200 und 300 N/mm² beträgt, wobei der Umschlingungswinkel des weiteren Gleitlagers (31) nicht mehr als 120° beträgt.

2. Druckluftbetätigte Scheibenbremse nach Anspruch 1, ***dadurch gekennzeichnet*, daß** Gleitfläche aus 80 Vol.-% Polyvinylidenfluorid, 10 Vol.-% Polytetrafluoräthylen und 10 Vol.-% Blei besteht.

3. Druckluftbetätigte Scheibenbremse nach Anspruch 1 oder 2, ***dadurch gekennzeichnet*, daß** in der druckbeaufschlagten Gleitfläche des Gleitlagers *(31)* Schmiertaschen ausgebildet sind.

4. Druckluftbetätigte Scheibenbremse nach einem der Ansprüche 1 bis 3, ***dadurch gekennzeichnet*, daß** die druckbeaufschlagte Gleitfläche des Gleitlagers *(31)* zwischen 0.05 und 0.1 mm dick ist.

5. Druckluftbetätigte Scheibenbremse nach einem der Ansprüche 1 bis 4, ***dadurch gekennzeichnet*, daß** zwischen der druckbeaufschlagten Gleitfläche des Gleitlagers *(31)* und einer Träger-Basisschicht eine poröse Zwischenschicht aus Bronze angeordnet ist, die vorzugsweise aus 9 bis 12 % Zinn, maximal 12 % Blei und Rest Kupfer besteht.

6. Druckluftbetätigte Scheibenbremse nach einem der Ansprüche 1 bis 5, ***dadurch gekennzeichnet*, daß** die Träger-Basisschicht des Gleitlagers *(31)* aus Stahl gebildet ist.

7. Druckluftbetätigte Scheibenbremse nach einem der Ansprüche 1 bis 6, ***dadurch gekennzeichnet*, daß** das Gleitlager *(31)* im geschmierten Zustand betrieben wird.

8. Druckluftbetätigte Scheibenbremse nach einem der Ansprüche 1 bis 7, ***dadurch gekennzeichnet*, daß** als Exzenter ein parallel zur Drehachse *(25)* wirkender Nocken vorgesehen ist, der exzentrisch zur Drehachse *(25)* am Drehhebel *(4, 4a)* und mit zur Bremsscheibe *(1)* gerichteter Druckrichtung an der Traverse *(7)* angreift.

9. Druckluftbetätigte Scheibenbremse nach Anspruch 8, ***dadurch gekennzeichnet*, daß** der Nocken durch eine Drehlagerungsvorrichtung mit mindestens einem im wesentlichen halbkreisförmigen Drehlager *(31)* gebildet ist.

## Claims

1. A compressed-air actuated disk brake for utility vehicles with a caliper (2) which reaches around a brake disk (1) and on one side of which a brake application device (3) is arranged which has a pivoting lever (4, 4a) which is disposed, facing away from said brake disk, in an essentially semicircular pivot bearing (30) supported with respect to said caliper (2) so that it can be swiveled about an axis of rotation (25) extending in parallel to the plane of said brake disk (1) and, facing said brake disk, by means of an eccentric (6) rests approximately in the longitudinal center against a traverse (7) which extends in parallel to the axis of rotation (25) and which is guided to be displaceable with respect to said brake disk (1) and, by way of at least one pressure member (70, 71), acts upon a brake pad (10) which, on the brake application side, is disposed in said caliper (2) to be displaceable with respect to said brake disk (1), with a further bearing (31) being provided between said eccentric (6) and said traverse (7) or between said eccentric (6) and said pivoting lever (4), **characterized in that** at least the further one of said two bearings (31) is constructed as a slide bearing whose slide surface receiving applied pressure is composed of at least 70% by volume polyvinylidene fluoride, at least 10% by volume polytetrafluoroethylene, and for the rest lead, with the slide surface receiving applied pressure of the further slide bearing (31) being dimensioned in such a way that the bearing load is between 200 and 300 N/mm² occurring at maximum pressurization of the pivoting lever (4, 4a), with the angle of wrap of the further slide bearing (31) being not more than 120°.

2. A compressed-air actuated disk brake according to claim 1, **characterized in that** said slide surface is composed of 80% by volume polyvinylidene fluoride, 10 % by volume polytetrafluoroethylene, and 10% by volume lead.

3. A compressed-air actuated disk brake according to claim 1 or 2, **characterized in that** lubricating bore reliefs are formed in said slide surface receiving applied pressure of said slide bearing (31).

4. A compressed-air actuated disk brake according to one of the claims 1 to 3, **characterized in that** said slide surface receiving applied pressure of said slide bearing (31) has a thickness between 0.05 and 0.1 mm.

5. A compressed-air actuated disk brake according to one of the claims 1 to 4, **characterized in that** between said slide surface receiving applied pressure of said slide bearing (31) and a support base layer, a porous intermediate layer of bronze is arranged which preferably is composed of 9 to 12% tin, at the most 12% lead and the rest copper.

6. A compressed-air actuated disk brake according to one of the claims 1 to 5, **characterized in that** said support base layer of said slide bearing (31) is formed of steel.

7. A compressed-air actuated disk brake according to one of the claims 1 to 6, **characterized in that** the slide bearing (31) is operated in the lubricated state.

8. A compressed-air actuated disk brake according to one of the claims 1 to 7, **characterized in that** a cam acting in parallel to said axis of rotation (25) is provided as said eccentric, which cam acts eccentrically with respect to said axis of rotation (25) on said pivoting lever (4, 4a) and acts on said traverse (7) with the direction of thrust being directed towards said brake disk (1).

9. A compressed-air actuated disk brake according to claim 8, **characterized in that** said cam is formed by a pivot bearing device having at least one essentially semi-circular pivot bearing (31).

## Revendications

1. Frein à disque actionné par air comprimé pour véhicules utilitaires comportant un étrier de frein (2) qui entoure un disque de frein (1) et sur un côté duquel est disposé un dispositif de serrage (3), qui possède un levier pivotant (4, 4a) et est monté, à l'opposé du disque de frein, dans un palier tournant (30) de forme sensiblement semi-circulaire, qui prend appui sur l'étrier de frein (2), de manière à pouvoir pivoter autour d'un axe de rotation (25) qui est parallèle au plan du disque de frein (1) et s'applique, du côté tourné vers le disque de frein, au moyen d'un excentrique (6), approximativement au centre, dans la direction longitudinale, sur une traverse (7) qui s'étend parallèlement à l'axe de rotation (25) et qui est guidée de manière à pouvoir coulisser par rapport au disque de frein (1) et agit, par l'intermédiaire d'au moins un élément de pression (70, 71), sur une mâchoire de frein (10) montée dans l'étrier de frein (2), sur le côté serrage, de manière à pouvoir coulisser par rapport au disque de frein (1), un autre palier (31) étant prévu entre l'excentrique (6) et la traverse (7) ou entre l'excentrique (6) et le levier pivotant (4), **caractérisé par le fait que** l'autre palier (31) au moins est réalisé sous la forme d'un palier lisse dont la surface de glissement, soumise à une pression, est formée par au moins 70% en volume de poly(fluorure de vinylidène), au moins 10% en volume de polytétrafluoroéthylène, le reste étant du plomb, la surface de glissement soumise à une pression de l'autre palier lisse (31) étant dimensionnée de telle sorte que la contrainte appliquée au palier, qui apparaît dans le cas d'une charge maximale en pression du levier pivotant (4, 4a), est comprise entre 200 et 300 N/mm², l'angle d'enveloppement de l'autre palier lisse (31) étant inférieur ou égal à 120 degrés.

2. Frein à disque actionné par air comprimé suivant la revendication 1, **caractérisé par le fait que** la surface de glissement est constituée par 80% en volume de poly(fluorure de vinylidène), 10% en volume de polytétrafluoroéthylène et 10% en volume de plomb.

3. Frein à disque actionné par air comprimé suivant la revendication 1 ou 2, **caractérisé par le fait que** des logements à graisse sont formés dans la surface de glissement, soumise à une pression, du palier lisse (31).

4. Frein à disque actionné par air comprimé suivant l'une des revendications 1 à 3, **caractérisé par le fait que** la surface de glissement, soumise à une pression, du palier lisse (31) possède une épaisseur comprise entre 0,05 et 0,1 mm.

5. Frein à disque actionné par air comprimé suivant l'une des revendications 1 à 4, **caractérisé par le fait qu'**entre la surface de glissement, soumise à une pression, du palier lisse (31) et une couche de support de base est disposée une couche intermédiaire poreuse en bronze qui est constituée de préférence par 9 à 12% d'étain, au maximum 12% de plomb et par du cuivre pour le reste.

6. Frein à disque actionné par air comprimé suivant l'une des revendications 1 à 5, **caractérisé par le fait que** la couche de support de base du palier lisse (31) est en acier.

7. Frein à disque actionné par air comprimé suivant l'une des revendications 1 à 6, **caractérisé par le fait que** le palier lisse (31) fonctionne à l'état lubrifié.

8. Frein à disque actionné par air comprimé suivant l'une des revendications 1 à 7, **caractérisé par le fait qu'**il est prévu comme excentrique une came qui agit parallèlement à l'axe de rotation (25) et qui attaque le levier (4, 4a) d'une manière excentrée par rapport à l'axe de rotation (25) et attaque la traverse (7) avec une direction de pression dirigée vers le disque de frein (1).

9. Frein à disque actionné par air comprimé suivant la revendication 8, **caractérisé par le fait que** la came est formée par un dispositif de tourillonnage en rotation comportant au moins un palier tournant (31) possédant une forme essentiellement semi-circulaire.
